# EUROPEAN PATENT SPECIFICATION

(11) **EP 4 059 605 B1**
(45) Date of publication and mention of the grant of the patent: **22.05.2024**
(21) Application number: 22160979.5
(22) Date of filing: 09.03.2022
(51) Int. Cl.: B01L 3/02, G01N 35/10

(54) **PIPETTE-FILLABLE CARTRIDGE FLUID DETECTION**
FLÜSSIGKEITSDETEKTION IN EINER MIT EINER PIPETTE BEFÜLLBAREN KARTUSCHE
DÉTECTION DE FLUIDE DE CARTOUCHE REMPLISSABLE À LA PIPETTE

(30) Priority: 18.03.2021 US 202117205001
(43) Date of publication of application: 21.09.2022
(73) Proprietor: Funai Electric Co., Ltd., Daito, Osaka, 574-0013 (JP)
(72) Inventor: DEBOARD, Bruce A., Lexington, 40508 (US); GIBSON, Bruce D., Lexington, 40508 (US); MARRA III, Michael A., Lexington, 40508 (US)
(74) Representative: Becker, Eberhard

(56) References cited:
- WO-A1-2021/021071
- JP-A- H03 190 748
- US-A1- 2008 305 969
- US-A1- 2016 169 808
- US-A1- 2017 225 454
- US-A1- 2020 271 679

## Description

### TECHNICAL FIELD

The disclosure is directed to a digital dispense device having a pipette-fillable cartridge and in particular to a system and method for determining the presence or absence of a fluid in a chamber of a pipette-fillable fluid cartridge.

### BACKGROUND AND SUMMARY

In the medical field, in particular, there is a need for automated sample preparation and analysis. The analysis may be colorimetric analysis or require the staining of samples to better observe the samples under a microscope. Such analysis may include drug sample analysis, blood sample analysis and the like. Assay analysis of blood, for example, provides a number of different factors that are used to determine the health of an individual. When there are a large number of patients that require blood sample analysis, the procedures may be extremely time consuming. For assay analysis, such as drug screenings, it is desirable to deposit miniscule amounts of target reagents to evaluate their effect and performance on the samples. Traditionally, pipettes - manually or electromechanically actuated - are used to deposit trace substances into these assay samples. The total volume of a test fluid produced for an assay is dictated by the ability to achieve a desired ratio of reagents with respect to the least of the reagents. Due to the small-scale volumetric limitations of pipettes, it is often necessary to create an excess of testing fluid to achieve the proper ratio of reagents.

It is well known that thermal inkjet technology is capable of precisely distributing picolitre-sized droplets of a jetting fluid. The precision and speed offered by inkjet technology makes it a promising candidate for increasing throughput of assay samples while decreasing the amount of wasted sample. In a conventional thermal-jet printer, a jetting fluid is typically prefilled into a printhead before reaching the end-user. However, it is impractical to use a prefilled cartridge in the life-sciences field where it is desirable to produce testing solutions on site.
US 2016/169808 A1 discloses an injector assembly injecting a reagent onto a sample, and luminescent light from the sample is transmitted to a detector. The assembly is movable toward and away from the sample. The assembly includes one or more needles that communicate with one or more reservoirs supplying reagent or other liquids. The assembly includes a light guide for communicating with the detector. A cartridge is provided in which the assembly, one or more reservoirs, and one or more pumps are disposed. The cartridge and/or the apparatus are configured for enabling rinsing or priming to be done outside the apparatus. The cartridge and/or the apparatus include one or more types of sensors configured for detecting.
JP H03 190748 A discloses an inkjet head with a thermistor directly provided to a lower end of a radiator in such a state that the detection part thereof protrudes from a radiator by about 0.5mm and connected to a constant current source through a voltage detection means. At this time, since the thermistor is provided in an ink reservoir, the quantity of heat supplied to the thermistor and the quantity of heat radiated from the radiator reaches certain equilibrium temp. and the detection temp. due to the thermistor is determined. At this time, a voltage value is detected using the voltage detection means.

Accordingly, a pipette-fillable cartridge may be used with the digital dispense system. Pipette-fillable cartridges are filled at the time of use with a pre-determined amount of fluid for performing a chemical assay of a sample. In some cases, the fluid is to be deposited in a well of a micro-well plate or onto a glass slide. Since the amount of fluid to be dispensed is critical to the assay analysis being performed, it is important to know if a fluid and the right amount of fluid is pipetted into a fluid chamber of a pipette-fillable cartridge. If the chamber is devoid of fluid, or prematurely runs out of fluid before the assay is complete, the sample may be ruined or provide inaccurate results. Accordingly, what is needed is an apparatus and method for notifying a user that a fluid chamber of a pipette-fillable cartridge may be devoid of fluid.

The present invention is provided by the appended claims. The following disclosure serves a better understanding of the present invention. In view of the foregoing, an embodiment of the disclosure provides a digital dispense system and method of using a digital dispense system. The digital dispense system includes a pipette-fillable fluid cartridge having one or more fluid chambers therein and having an ejection head attached thereto. The ejection head contains a plurality of fluid ejectors thereon. The fluid ejectors are in fluid flow communication with the one or more fluid chambers of the pipette-fillable fluid cartridge. A fluid detection circuit is disposed on the ejection head and associated with at least one of the plurality of fluid ejectors for signaling the presence or absence of fluid in the one or more fluid chambers A processor is disposed, configured with a fluid detect algorithm, wherein the processor is in electrical communication with the fluid detection circuit for activating an error signal in the absence of fluid.

The dispense system is characterized in that the fluid detect algorithm is programmed to use (a) fluid conductivity data, (b) ejector thermal data, or a combination of (a) and (b) to determine if a fluid is present in the at least one fluid chamber, and in that the fluid detect algorithm is programmed to (i) use fluid conductivity data initially and to (ii) use ejector thermal data if fluid is not found by (i).

In another embodiment, there is provided a method for dispensing fluid with a digital dispense system. The method includes providing a pipette-fillable fluid cartridge having one or more fluid chambers therein and having an ejection head attached thereto. The ejection head contains a plurality of fluid ejectors thereon, wherein the fluid ejectors are in fluid flow communication with the one or more fluid chambers of the pipette-fillable fluid cartridge. A fluid detection circuit is disposed on the ejection head and associated with at least one of the plurality of fluid ejectors for signaling the presence or absence of fluid in the one or more fluid chambers. At least one of the one or more fluid chambers is filled with a fluid to be dispensed. A diagnostic function of the digital dispense system is activated to determine if the fluid to be dispensed is present in or absent from the at least one of the one or more fluid chambers. A fluid dispense sequence is activated in an absence of an error or warning from the diagnostic function.

The method is characterized in that it further comprises using (a) fluid conductivity data, (b) ejector thermal data, or a combination of (a) and (b) to determine if a fluid is present in the at least one fluid chamber, whereby initially fluid conductivity data is used and if fluid is not found by (i), (ii) ejector thermal data is used.

In another embodiment, there is provided a dispense system that includes a pipette fillable cartridge having at least one fluid chamber therein and an ejection head in fluid flow communication with the at least one fluid chamber. The ejection head contains a plurality of fluid ejectors and a fluid detection circuit thereon. A processor is disposed in the dispense system and is configured with a fluid detect algorithm. The processor is in electrical communication with the fluid detection circuit for activating an error signal in the absence of fluid in the at least one fluid chamber. A user input device is provided for modifying or terminating a fluid dispense sequence upon error signal activation. The dispense system is characterized in that the fluid detect algorithm is programmed to use (a) fluid conductivity data, (b) ejector thermal data, or a combination of (a) and (b) to determine if a fluid is present in the at least one fluid chamber and in that the fluid detect algorithm is programmed to (i) use fluid conductivity data initially and to (ii) use ejector thermal data if fluid is not fould by (i).

In some embodiments, the fluid detection circuit is selected from (a) a conductivity sense circuit, (b) a thermal sense circuit, and a combination of (a) and (b). In some embodiments, the conductivity sense circuit includes a first electrode in electrical communication with at least one of the plurality of fluid ejectors, and a second electrode is disposed in a fluid flow path to at least one of the plurality of fluid ejectors. In other embodiments, the thermal sense circuit includes a voltage slope detect circuit for at least one of the plurality of fluid ejectors.

In some embodiments, the fluid cartridge comprises two or more discrete fluid chambers.

In some embodiments, the ejection head comprises two or more arrays of fluid ejectors thereon and at least one fluid ejector from each of the two or more arrays of fluid ejectors is associated with the fluid detection circuit.

In some embodiments, the fluid dispense sequence is modified in the presence of an error or warning from the diagnostic function that indicates an incorrect fluid in the at least one of the one or more fluid chambers.

In some embodiments, the fluid dispense sequence is modified in the presence of an error or warning from the diagnostic function that indicates that fluid is absent from the at least one of the one or more fluid chambers.

In some embodiments, the fluid dispense sequence is terminated in the presence of an error or warning from the diagnostic function that indicates that fluid is absent from the at least one of the one or more fluid chambers.

The fluid detect algorithm is programmed to use (a) fluid conductivity data, (b) ejector thermal data, or a combination of (a) and (b) to determine if a fluid is present in the at least one fluid chamber.

The fluid detect algorithm is programmed to (i) use fluid conductivity data initially and to (ii) use ejector thermal data if fluid is not found by step (i).

In some embodiments, the pipette-fillable cartridge contains two or more fluid chambers and the fluid detect algorithm is programmed to determine if a fluid is absent from a predetermined one of the two or more fluid chambers.

In some embodiments, the fluid detect algorithm is programmed to determine when the at least one fluid chamber runs out of fluid.

An advantage of the disclosed embodiments is that it provides unique low-cost pipette-fillable cartridges that provide feedback to a user if fluid chambers of the cartridge do not contain fluid or an incorrect fluid is pipetted into a fluid chamber. Other advantages of the embodiments enable a user to determine if the correct amount of fluid was pipetted into a fluid chamber for a particular analysis job. Feedback provided by the system disclosed herein may be used to correct errors before beginning a fluid dispense job.

### BRIEF DESCRIPTION OF THE DRAWINGS

FIG. 1 is a perspective view, not to scale, of a digital dispense system according to an embodiment of the disclosure.
FIG. 2 is a perspective view, not to scale, of a tray and microwell plate for use with the digital dispense system of FIG. 1.
FIG. 3 is a perspective view, not to scale, of a pipette-fillable cartridge for use with the digital dispense system of FIG. 1.
FIG. 4 is a plan view, not to scale, of an ejection head for the pipette-fillable cartridge of FIG. 3.
FIG. 5 is an enlarged plan view, not to scale of a portion of an ejector array on the ejection head of FIG. 4.
FIGs. 6 and 7 are schematic views not to scale of a fluid detect circuit without and with fluid according to an embodiment of the disclosure.
FIG. 8 is a schematic diagram of the fluid detect circuit of FIGs. 6 and 7.
FIG. 9 is schematic diagram of a voltage change circuit for use with the fluid detect circuit of FIGs. 6 and 7.
FIGs. 10 and 11 are schematic diagrams of thermal detect circuits according to a second embodiment of the disclosure.
FIG. 12 is a schematic view of a digital output from the thermal sense circuits of FIGs. 10 and 11.
FIG. 13 is block diagram of the digital dispense system of FIG. 1
FIG. 14 is a process flow diagram for the fluid sense circuits according to embodiments of the disclosure.

### DETAILED DESCRIPTION OF EXEMPLARY EMBODIMENTS

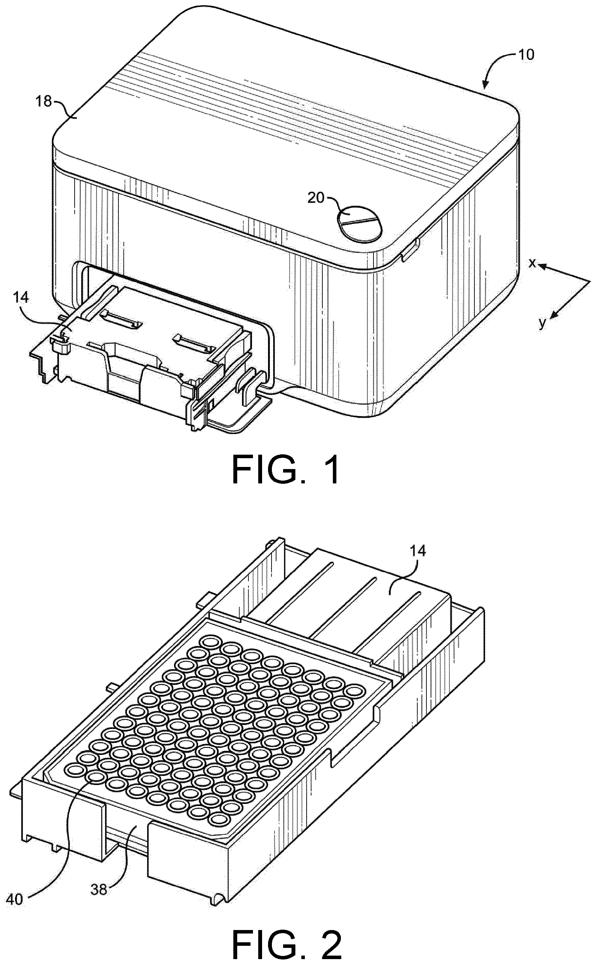

With reference to FIGs. 1-2 there is shown a digital dispense device 10 for accurately dispensing an amount of one or more fluids onto a substrate. Unlike the high-end digital dispense devices, the device 10 of the present invention is based on an ejection head that moves back and forth in a first x direction and a tray 14 for moving a substrate that moves back and forth in a second y direction orthogonal to the first direction during the fluid dispense operation. The tray 14 is adaptable to a wide variety of substrates including, but not limited to, micro-well plates, glass slides, electronic circuit boards and the like. FIG. 2 illustrates a tray 14 for holding a micro-well plate 38 containing wells 40 therein for use with the digital dispense device 10 to dispense fluid into the wells 40 of the micro-well plate or onto the glass slides. The tray 14 may include adapters for different size micro-well plates or for holding slides or other substrates for deposit of fluid thereon.

The dispense head cartridge containing a fluid ejection head and a cartridge movement mechanism are contained in a rectangular prism-shaped box 18. An activation switch 20 is included on the box 18 for activating the device 10. A rear side of the box 18 includes an opening for movement of the tray 14 through the box 18 in the second direction to dispense fluid onto a substrate. A USB port is provided on the box 18 to connect the digital dispense system 10 to a computer or a digital display device. Power is provided to the system 10 through a power input port on the box 18.

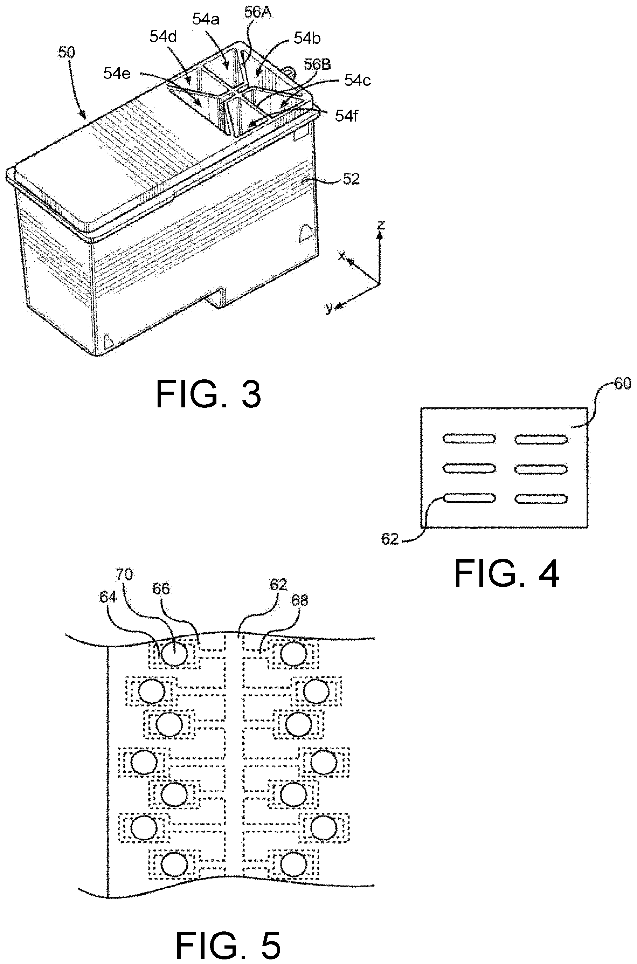

A pipette-fillable cartridge 50 for use with the digital dispense device 10 of FIG. 1 is illustrated in FIG. 3. The cartridge 50 has a molded body 52 that provides one or more open fluid chambers 54a-54f therein. The fluid chambers 54a-54f are separated from one another by dividing walls 56A and 56B. Each of the fluid chambers 54a-54f is associated with a fluid via for providing fluid to an array of fluid ejectors on an ejection head. With reference to FIG. 4, an ejection head 60 containing six fluid vias 62 and associated arrays of fluid ejectors is shown. A greatly magnified portion of the ejection head 60 is illustrated in more detail in FIG. 5. Each fluid via 62 provides fluid from one of the fluid chambers 54a-54f to arrays of fluid ejectors 64 disposed on one or both sides of the fluid via 62. The fluid ejectors are located in a fluid ejection chamber 66. Fluid is provided from the fluid via 62 through a fluid channel 68 to the fluid ejection chamber 66. Upon activation of the fluid ejector 64, fluid is dispensed through an ejection nozzle 70 to a substrate which may be the well 40 of the micro-well plate 38 or to a glass slide.

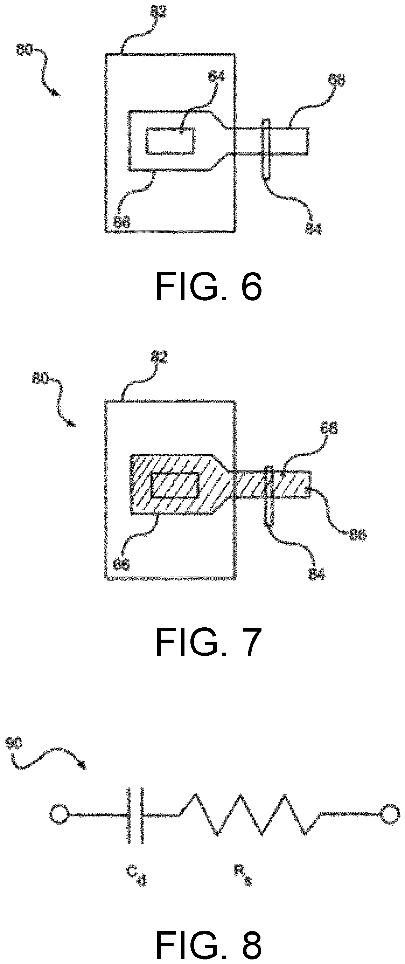

In order to determine if the fluid chambers 54a-54f contain fluid, a fluid detection circuit selected from one or more of a conductivity sense circuit and/or a thermal sense circuit may be used. A conductivity detection device 80 is illustrated in a simplified plan view in FIG. 6 of a single fluid ejection chamber 66 containing electrodes 82 and 84. Electrode 82 may be a tantalum protective layer disposed over the fluid ejector 64. A second electrode 84 is disposed in the fluid channel 68 for fluid from the fluid via 62 to the fluid ejection chamber 66. Each of the electrodes 82 and 84 may be made of a metal such as tantalum which is resistant to the fluids dispensed by the digital dispense device 10. Accordingly, any suitable metal may be used as electrodes 82 and 84. At least one electrode 82 and one electrode 84 may be provided for each array of fluid ejectors 64 on the ejection head 60.

FIG. 7 shows the conductivity detection device 80 in a steady state with the fluid chamber 66 and fluid channel 68 filled with fluid 86. As shown, the first electrode 82 and second electrode 84 are now fluidly connected by means of a conductive fluid 86. It is known from electrochemical principles that the relationship between the fluid and the first and second electrodes 82 and 84 can be represented by an electrical circuit 90 with a resistor, Rs, representing the solution resistance and the capacitor, Cd, representing the double layer capacitance formed at the electrode to fluid interface when biased as shown in FIG. 8. It should be understood that in the case where a conductive liquid is not present the double layer capacitor does not exist, and the series resistance would appear as an open circuit 90.

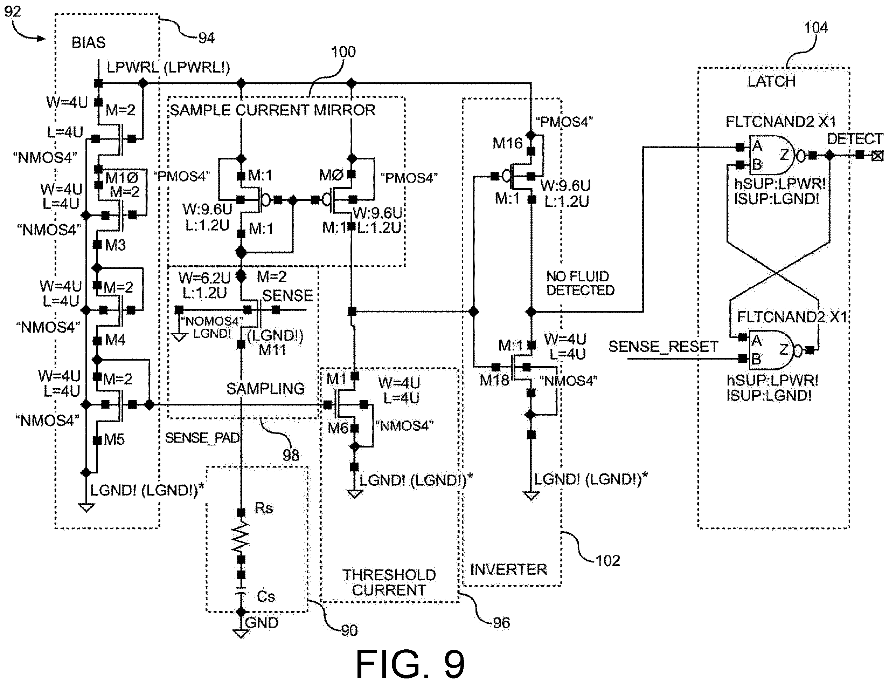

In an exemplary embodiment, a voltage step is applied to the circuit 90 and the resulting response is used to sense the presence or absence of liquid. An exemplary circuit 92 for making a voltage change measurement using the conductivity detection device 80 is illustrated in FIG. 9. The circuit 92 provides a digital high output when fluid is present in the conductivity detection device 80 and a digital low output when the detection device 80 is devoid of fluid.

The circuit 92 may be grouped into seven functional blocks. The bias block 94 develops a current bias used by the threshold detection block 96. The sampling block 98 connects the sampling pad to the sample current mirror 100 when the sense pin is at a high state. The sample current mirror 100 then replicates the fluid current sensed and the current flows into the threshold current detection block 96. If the mirrored current sensed is greater than the threshold current then fluid is present and the inverter block 102 produces a low state at the input of the latch block 104 and the latch block detect pin will go to a high state. The latch is required because of the transient charging nature of the current that flows through the fluid. If fluid is not present then the sampled current will be much less (almost zero) than the threshold detect current. The inverter will then produce a high state which also produces a low state at the latch detect output. The latch is a memory element and its state will persist until its sense_reset pin is forced to a high state. The high state of the sense_reset pin will clear the latch's detect output pin to a low state. In summary, a transient current pulse through the fluid causes the latch to trigger and its detect output pin will be latched at a high state or the "fluid sensed" state.

While the foregoing conductivity detection device 80 may be applied to all of the fluid ejectors in an array of fluid ejectors 64, a single conductivity detection device 80 may be used for each array of fluid ejectors 64. Accordingly, if fluid is not sensed by the conductivity detection device 80 for a single array of fluid ejectors, a warning signal may be sent by a processor in the digital dispense system to a user as described in more detail below.

For fluids that are non-conductive, the conductivity detection device 80 may not be suitable for detecting the presence or absence of fluid in a fluid chamber 54a-54f. Accordingly, a backup fluid detection circuit may also be included on the ejection head 60. In this embodiment, the fluid ejectors 64 are thermal fluid ejectors that are used to heat a fluid and create a vapor bubble in the fluid chamber 66. The formation of a bubble on a surface of the thermal fluid ejectors is detected based on the slope change in the current passing through the fluid ejector 64. If no fluid is present on the surface of the thermal fluid ejector, the rate at which the surface of the fluid ejector 64 is heated will increase. By detecting a change in the rate of heating of the ejector surface, the presence or absence of fluid can be detected.

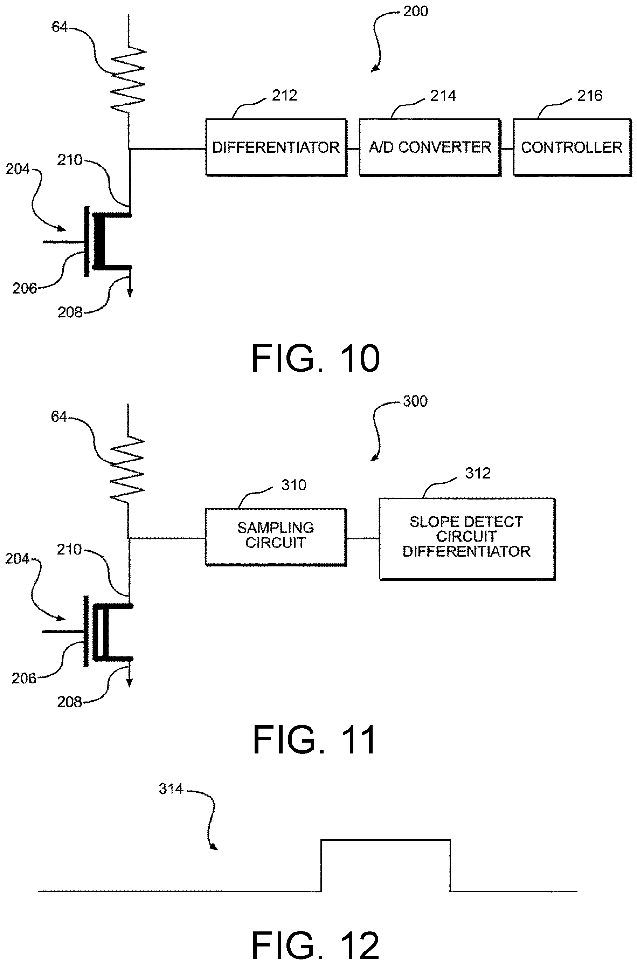

FIG. 10 is a block diagram of thermal sense circuit 200 for a fluid detection device according another embodiment of the disclosure. The thermal sense circuit 200 includes a differentiator 212, and A/D converter 214 and a controller 216. The thermal sense circuit 200 is configured to sense the voltage at the drain of the power FET of the driving element of at least one fluid ejector 64 of a fluid ejector array. In FIG. 10, the fluid ejector 64 is shown (represented as a resistor) including a corresponding driving element 204. The driving element 204 is preferably a MOSFET driving element, including a polysilicon gate 206, source 208, and drain 210. Each driving element is operable to selectively enable the fluid ejector 64 according to a logic structure provided by a controller 216 in the digital dispense system 10.

The differentiator 212 is electrically connected to the drain 210 of the driving element 204. The differentiator 212 serves to enhance the small slope change of a voltage that occurs at the time of fluid bubble formation on the surface of the fluid ejector 64. For example, assume that a fluid ejector 64 having a sheet resistance of 350 ohms per square (ohms/sq) and a negative temperature coefficient of -320 ppm is used for the thermal sense circuit 200. At the time of a bubble formation on the surface of the fluid ejector 64, there is a slight increase in the slope of the fluid ejector current. While the slope change is small, it is detectable using a measuring oscilloscope to determine the exact time when the change in fluid ejector current occurs. The fluid sense circuit 200 senses the current through the fluid ejector 64 in order to sense bubble formation.

In another embodiment, the voltage at the drain of the power FET is sensed. As with the measured current previously discussed, the slope change of the voltage is small and is best enhanced by a differentiation of the value by the differentiator 212. The differentiator 212 may be any suitable differentiator circuit known in the art and may include circuit components such as, for example, capacitors and operational amplifiers.

The output of the differentiator 212 is sent to the A/D converter 214, the output of which is then sent to the controller 216. The controller 216 may be configured to remove power from the heater 202 if no fluid is detected. In this way, the thermal sense circuit 200 may be used to determine the condition of the fluid ejector. For example, by programming the controller 216 with preset values for voltage slope change and times, the thermal sense circuit 200 can determine whether a voltage slope change actually occurs, and if so, whether the slope change matches the programmed value and timing. Any deviation from the programmed values would indicate that fluid is absent from the surface of the fluid ejector 64.

The controller 216 may be configured to disable a fire pulse when the absence of fluid is detected, or may be configured to alert the user that the fluid chamber 54a-54f is devoid of fluid. In this regard, when a slope change is detected, the differentiator 212 may output a logic high or digital 1. When this value is inverted and then ANDed with the fire pulse the result is that the signal is gated and the power FET device is turned off.

FIG. 11 is a block diagram of an alternative thermal sense circuit 300 for a fluid detection circuit according another exemplary embodiment of the disclosure. The thermal sense circuit 300 includes a sampling circuit 310 and a slope detect circuit differentiator 312. As shown, the voltage is sampled at the transistor drain node as described above, but in the present embodiment the drain voltage is passed as an input to the sampling circuit 310. The sampling circuit 310 can be a switched capacitor circuit with an analog output or an A/D circuit with a digital output. The output value from the sampling circuit 310 is fed into the slope detect circuit differentiator 312 which performs a sample to sample differentiation of the signal. A sudden change in slope is detected within the slope detect circuit differentiator 312 and converted to a digital output 314 as shown in FIG. 12. As in the previous embodiment, the slope detect circuit differentiator 312 may output a logic high or digital 1 which is used to turn the power MOS FET off and signal the user that the fluid chamber is devoid of fluid.

It will be appreciated that one or both of the fluid detect circuits may be used for the pipette-fillable cartridge 50 described above. The fluid detect circuits may be used individually or sequentially, or the system may be programmed to use one fluid detect circuit for one fluid and a different fluid detect circuit for a different fluid. In some embodiments, a conductivity detect circuit may be used first to detect the presence or absence of fluid, and if no fluid is detected, a thermal sense circuit will then be used to detect the presence or absence of fluid. If one or more fluid chambers 54a-54f contain fluid, the fluid will flow into the ejection head 60 from the fluid via 62 to fill the fluid channel 68 and fluid chamber 66. Upon activation of the fluid ejector 64, fluid will then be ejected through the fluid nozzle 70 to a substrate such as the well of the micro-well plate or onto a glass slide. If no fluid is present in the fluid chamber, then the fluid detect circuit will be activated to notify the user of a problem.

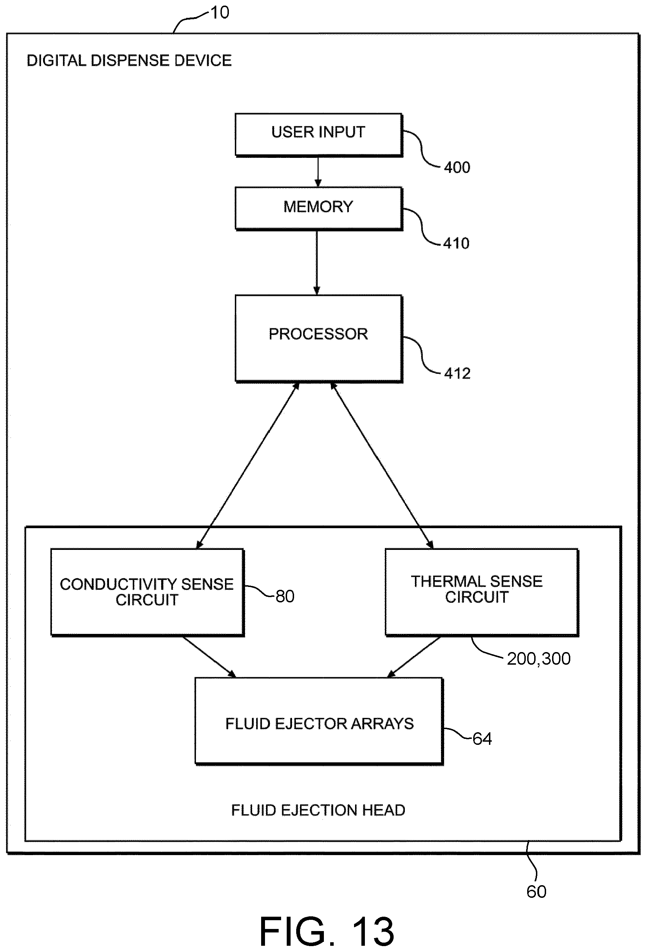

FIG. 13 is a block diagram of a digital dispense system 10 having a user input block 400 for inputting fluid information, fluid chamber information, fluid dispense location, fluid dispense volume, fluid chamber volume, and substrate type into a memory 410 of the device 10. The processor 412 is configured with an algorithm that uses the memory information and feedback from the fluid detection circuits 80, 200 or 300 to control the fluid ejectors 64 on the ejection head 60.

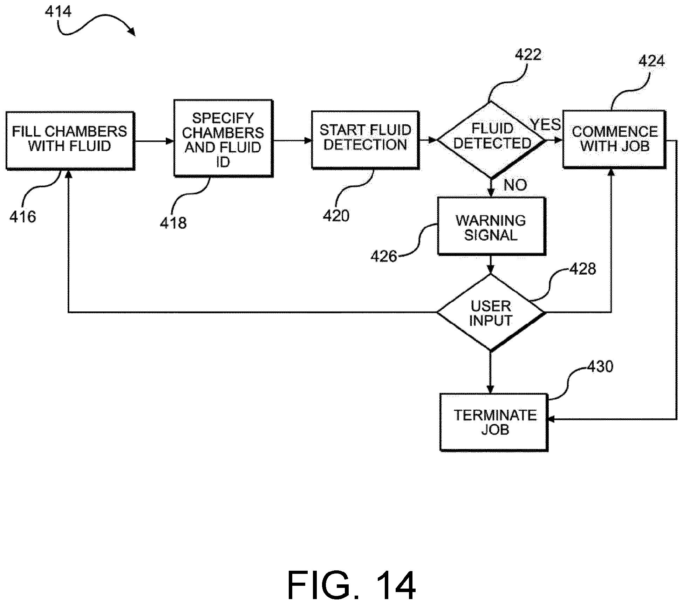

As shown in FIG. 14, a first step 416 of the process 414 of dispensing fluid by the digital dispense device 10 is to fill one or more fluid chambers 54a-54f with fluid using a pipette. The user also specifies the fluid chamber(s) that contain fluid and the identification of which fluid is in which fluid chamber in step 418. Once the information is stored in the memory 410 (FIG. 13), step 420 is initiated either manually or automatically to detect whether or not fluid is present in the specified fluid chamber(s) using one or both of the fluid detect circuits described above. If the fluid is conductive, then the processor activates the conductivity detection device 80 to determine if fluid is present. If no fluid is detected because the specified fluid chamber(s) is empty or the fluid is non-conductive, then the processor activates the thermal sense circuit 200/300 to determine if fluid is present in the specified fluid chamber(s). If fluid is detected in the correct fluid chambers in step 422, then the dispense job commences in step 424 until the job is complete and terminated in step 430. However, if there is no fluid present in the specified fluid chamber(s) or the fluid is determined to be in the incorrect fluid chamber(s), an error signal is provided in step 426 requiring the user to intervene in the process in step 428. The user may terminate the dispense job in step 430, or correctly fill the chambers in step 416 and/or specify which fluid is in which chamber in step 418.

For example, if fluid is supposed to be pipetted into fluid chamber 54a and the user mistakenly pipettes fluid into fluid chamber 54b, the fluid detection circuit can detect that fluid chamber 54a is devoid of fluid and can detect that chamber 54b contains fluid. The processor can display a warning that an error occurred and allow the user to fix the error before proceeding to step 424. In the alternative, the processor can be programmed to virtually move the fluid data from fluid chamber 54a to fluid chamber 54b automatically or upon input by the user. The processor could also be programmed to continuously check for fluid in each of the fluid chambers during the dispense operation to determine if a chamber runs out of fluid before the fluid dispense operation is complete. Information about the amount of fluid used and the history of fluid ejected from individual fluid chambers may be stored in the memory for future reference or for troubleshooting fluid dispense operations.

It is noted that, as used in this specification and the appended claims, the singular forms "a," "an," and "the," include plural referents unless expressly and unequivocally limited to one referent. As used herein, the term "include" and its grammatical variants are intended to be non-limiting, such that recitation of items in a list is not to the exclusion of other like items that can be substituted or added to the listed items.

## Claims

1. A dispense system (10) comprising:
a pipette-fillable fluid cartridge (50) having one or more fluid chambers (54a~54f) therein and having an ejection head (60) attached thereto, the ejection head containing a plurality of fluid ejectors (64) thereon, wherein the fluid ejectors are in fluid flow communication with the one or more fluid chambers of the pipette-fillable fluid cartridge;
a fluid detection circuit (80, 200, 300) disposed on the ejection head and associated with at least one of the plurality of fluid ejectors for signaling the presence or absence of fluid in the one or more fluid chambers; and
a processor (412) disposed, configured with a fluid detect algorithm, wherein the processor (412) is in electrical communication with the fluid detection circuit (80, 200, 300) for activating an error signal in the absence of fluid,
the dispense system (10) being **characterized in that** the fluid detect algorithm is programmed to use (a) fluid conductivity data, (b) ejector thermal data, or a combination of (a) and (b) to determine if a fluid is present in the at least one fluid chamber (54a~54f),
the fluid detect algorithm is programmed to (i) use fluid conductivity data initially and to (ii) use ejector thermal data if fluid is not found by (i).

2. The dispense system of claim 1, wherein the fluid detection circuit (80, 200, 300) is selected from the group consisting of (a) a conductivity sense circuit (80), (b) a thermal sense circuit (200, 300), and a combination of (a) and (b).

3. The dispense system of claim 1, wherein the fluid detection circuit (80, 200, 300) comprises a conductivity sense circuit (80) and the conductivity sense circuit (80) comprises a first electrode (82) in electrical communication with at least one of the plurality of fluid ejectors, and a second electrode (84) disposed in a fluid flow path to the at least one of the plurality of fluid ejectors

4. The dispense system of claim 1, wherein the fluid detection circuit (80, 200, 300) comprises a thermal sense circuit (200, 300) and the thermal sense circuit (200, 300) comprises a voltage slope detect circuit (200) for at least one of the plurality of fluid ejectors (64),
wherein the voltage slope detect circuit (200, 300) is configured to detect a change in a heating rate of a surface of the at least one of the plurality of fluid ejectors (64).

5. The dispense system of claim 1, wherein the fluid cartridge (50) comprises two or more discrete fluid chambers.

6. The dispense system of claim 1, wherein the ejection head (60) comprises two or more arrays of fluid ejectors (64) thereon and at least one fluid ejector from each of the two or more arrays of fluid ejectors is associated with the fluid detection circuit (80, 200, 300).

7. A method for dispensing fluid with a dispense system (10), comprising:
providing a pipette-fillable fluid cartridge (50) having one or more fluid chambers (54a~54f) therein and having an ejection head (60) attached thereto, the ejection head containing a plurality of fluid ejectors (64) thereon, wherein the fluid ejectors are in fluid flow communication with the one or more fluid chambers of the pipette-fillable fluid cartridge; and a fluid detection circuit (80, 200, 300) is disposed on the ejection head and associated with at least one of the plurality of fluid ejectors for signaling the presence or absence of fluid in the one or more fluid chambers;
filling at least one of the one or more fluid chambers with a fluid to be dispensed;
activating a diagnostic function of the dispense system to determine if the fluid to be dispensed is present in or absent from the at least one of the one or more fluid chambers; and
initiating a fluid dispense sequence in an absence of an error or warning from the diagnostic function, the method being **characterized in** further comprising:
using (a) fluid conductivity data, (b) ejector thermal data, or a combination of (a) and (b) to determine if a fluid is present in the at least one fluid chamber (54a~54f),
wherein (i) initially fluid conductivity data is used and if fluid is not found by (i) (ii) ejector thermal data is used.

8. The method of claim 7, wherein the fluid detection circuit (80, 200, 300) is selected from the group consisting of (a) a conductivity sense circuit (80), (b) a thermal sense circuit (200, 300), and a combination of (a) and (b).

9. The method of claim 7 wherein the fluid detection circuit (80, 200, 300) comprises a conductivity sense circuit (80) and the conductivity sense circuit (80) comprises a first electrode (82) in electrical communication with at least one of the plurality of fluid ejectors, and a second electrode (84) disposed in a fluid flow path to at least one of the plurality of fluid ejectors.

10. The method of claim 7, wherein the fluid detection circuit (80, 200, 300) comprises a thermal sense circuit (200, 300) and the thermal sense circuit (200, 300) comprises a voltage slope detect circuit (200) for at least one of the plurality of fluid ejectors.

11. The method of claim 7, further comprising modifying the fluid dispense sequence in the presence of an error or warning from the diagnostic function that indicates an incorrect fluid in the at least one of the one or more fluid chambers (54a~54f).

12. The method of claim 7, further comprising modifying the fluid dispense sequence in the presence of an error or warning from the diagnostic function that indicates that fluid is absent from at least one of the one or more fluid chambers (54a~54f).

13. The method of claim 7, further comprising terminating the fluid dispense sequence in the presence of an error or warning from the diagnostic function that indicates that fluid is absent from at least one of the one or more fluid chambers (54a~54f).

14. A dispense system (10) comprising:
a pipette fillable cartridge (50) having at least one fluid chamber (54a~54f) therein and an ejection head (60) in fluid flow communication with the at least one fluid chamber, wherein the ejection head contains a plurality of fluid ejectors (64) and a fluid detection circuit (82, 200, 300) thereon;
a processor (412) disposed in the dispense system (10) configured with a fluid detect algorithm, wherein the processor is in electrical communication with the fluid detection circuit for activating an error signal in the absence of fluid in the at least one fluid chamber; and
a user input device (400) for modifying or terminating a fluid dispense sequence upon error signal activation, the dispense system (10) being **characterized in that** the fluid detect algorithm is programmed to use (a) fluid conductivity data, (b) ejector thermal data, or a combination of (a) and (b) to determine if a fluid is present in the at least one fluid chamber (54a~54f) and that the fluid detect algorithm is programmed to (i) use fluid conductivity data initially and to (ii) use ejector thermal data if fluid is not found by (i).

15. The dispense system of claim 14, wherein the pipette-fillable cartridge (50) comprises two or more fluid chambers (54a~54f) and wherein the fluid detect algorithm is programmed to determine if a fluid is absent from a predetermined one of the two or more fluid chambers (54a~54f).

16. The dispense system of claim 14, wherein the fluid detect algorithm is programmed to determine when the at least one fluid chamber (54a~54f) runs out of fluid.

17. The dispense system of claim 14, wherein the resistance and the capacitance is measured between two electrodes (84, 82) corresponding to one same fluid ejector (64).

18. The dispense system of claim 14, wherein the change of heating rate of the fluid ejector is used as the detecting mechanism.

## Patentansprüche

1. Abgabesystem (10), umfassend:
eine mit einer Pipette füllbare Fluidkartusche (50) mit einer oder mehreren Fluidkammern (54a - 54f) darin und mit einem daran angebrachten Ejektorkopf (60), wobei der Ejektorkopf eine Vielzahl von Fluidejektoren (64) darauf enthält, wobei die Fluidejektoren in Fluidströmungsverbindung mit der einen oder den mehreren Fluidkammern der mit einer Pipette füllbaren Fluidkartusche stehen;
eine Fluiderkennungsschaltung (80, 200, 300), die an dem Ejektorkopf angeordnet und mit mindestens einem der Vielzahl von Fluidejektoren assoziiert ist, um das Vorhandensein oder Fehlen von Fluid in der einen oder den mehreren Fluidkammern zu signalisieren; und
einen angeordneten Prozessor (412), der mit einem Fluiderkennungsalgorithmus konfiguriert ist, wobei der Prozessor (412) in elektrischer Verbindung mit der Fluiderkennungsschaltung (80, 200, 300) steht, um bei Abwesenheit von Fluid ein Fehlersignal zu aktivieren,
wobei das Abgabesystem (10) **dadurch gekennzeichnet ist, dass** der Fluiderkennungsalgorithmus so programmiert ist, dass er (a) Fluidleitfähigkeitsdaten, (b) thermische Ejektordaten oder eine Kombination von (a) und (b) verwendet, um zu bestimmen, ob eine Fluid in der mindestens einen Fluidkammer (54a-54f) vorhanden ist,
der Fluiderkennungsalgorithmus so programmiert ist, dass er (i) zunächst Fluidleitfähigkeitsdaten verwendet und (ii) thermische Ejektordaten verwendet, falls das Fluid nicht durch (i) gefunden wird.

2. Abgabesystem gemäß Anspruch 1, wobei die Fluiderkennungsschaltung (80, 200, 300) aus der Gruppe ausgewählt ist, bestehend aus (a) einer Leitfähigkeitsmessschaltung (80), (b) einer Wärmemessschaltung (200, 300) und einer Kombination von (a) und (b).

3. Abgabesystem gemäß Anspruch 1, wobei die Fluiderkennungsschaltung (80, 200, 300) eine Leitfähigkeitsmessschaltung (80) umfasst und die Leitfähigkeitsmessschaltung (80) eine erste Elektrode (82), die in elektrischer Verbindung mit mindestens einem der Vielzahl von Fluidejektoren steht, und eine zweite Elektrode (84) umfasst, die in einem Fluidströmungsweg zu dem mindestens einen der Vielzahl von Fluidejektoren angeordnet ist.

4. Abgabesystem gemäß Anspruch 1, wobei die Fluiderkennungsschaltung (80, 200, 300) eine Wärmemessschaltung (200, 300) umfasst und die Wärmemessschaltung (200, 300) eine Spannungsanstiegserkennungsschaltung (200) für mindestens einen der Vielzahl von Fluidejektoren (64) umfasst,
wobei die Spannungsanstiegserkennungsschaltung (200, 300) so konfiguriert ist, dass sie eine Änderung in einer Erwärmungsrate einer Oberfläche des mindestens einen der Vielzahl von Fluidejektoren (64) erfasst.

5. Abgabesystem gemäß Anspruch 1, wobei die Fluidkartusche (50) zwei oder mehr diskrete Fluidkammern umfasst.

6. Abgabesystem gemäß Anspruch 1, wobei der Ejektorkopf (60) zwei oder mehr Anordnungen von Fluidejektoren (64) darauf umfasst und mindestens ein Fluidejektor aus jeder der zwei oder mehr Anordnungen von Fluidejektoren mit der Fluiderkennungsschaltung (80, 200, 300) assoziiert ist.

7. Verfahren zur Abgabe von Fluid mit einem Abgabesystem (10), umfassend:
Bereitstellen einer mit einer Pipette befüllbaren Fluidkartusche (50) mit einer oder mehreren Fluidkammern (54a - 54f) darin und mit einem daran angebrachten Ejektorkopf (60), wobei der Ejektorkopf eine Vielzahl von Fluidejektoren (64) darauf enthält, wobei die Fluidejektoren in Fluidströmungsverbindung mit der einen oder den mehreren Fluidkammern der mit einer Pipette befüllbaren Fluidkartusche stehen; und eine Fluiderkennungsschaltung (80, 200, 300) an dem Ejektorkopf angeordnet und mit mindestens einem der Vielzahl von Fluidejektoren assoziiert ist, um das Vorhandensein oder Fehlen von Fluid in der einen oder den mehreren Fluidkammern zu signalisieren;
Füllen mindestens einer der einen oder mehreren Fluidkammern mit einem auszugebenden Fluid;
Aktivieren einer Diagnosefunktion des Abgabesystems, um zu bestimmen, ob das abzugebende Fluid in der mindestens einen der einen oder mehreren Fluidkammern vorhanden oder nicht vorhanden ist; und
Einleiten einer Fluidabgabesequenz in Abwesenheit eines Fehlers oder einer Warnung von der Diagnosefunktion, wobei das Verfahren **dadurch gekennzeichnet ist, dass** es ferner umfasst:
Verwenden von (a) Fluidleitfähigkeitsdaten, (b) thermischen Ejektordaten oder einer Kombination von (a) und (b), um zu bestimmen, ob ein Fluid in der mindestens einen Fluidkammer (54a-54f) vorhanden ist,
wobei (i) zunächst Fluidleitfähigkeitsdaten verwendet werden und, falls Fluid nicht durch (i) gefunden wird, (ii) thermische Ejektordaten verwendet werden.

8. Verfahren gemäß Anspruch 7, wobei die Fluiderkennungsschaltung (80, 200, 300) aus der Gruppe ausgewählt ist, bestehend aus (a) einer Leitfähigkeitsmessschaltung (80), (b) einer Wärmemessschaltung (200, 300) und einer Kombination von (a) und (b).

9. Verfahren gemäß Anspruch 7, wobei die Fluiderkennungsschaltung (80, 200, 300) eine Leitfähigkeitsmessschaltung (80) umfasst und die Leitfähigkeitsmessschaltung (80) eine erste Elektrode (82), die in elektrischer Verbindung mit mindestens einem der Vielzahl von Fluidejektoren steht, und eine zweite Elektrode (84) umfasst, die in einem Fluidströmungsweg zu dem mindestens einen der Vielzahl von Fluidejektoren angeordnet ist.

10. Verfahren gemäß Anspruch 7, wobei die Fluiderkennungsschaltung (80, 200, 300) eine Wärmemessschaltung (200, 300) umfasst und die Wärmemessschaltung (200, 300) eine Spannungsanstiegserkennungsschaltung (200) für mindestens einen der Vielzahl von Fluidejektoren (64) umfasst.

11. Verfahren gemäß Anspruch 7, ferner umfassend Modifizieren der Fluidabgabesequenz bei Vorhandensein eines Fehlers oder einer Warnung von der Diagnosefunktion umfasst, der/die ein falsches Fluid in der mindestens einen der einen oder mehreren Fluidkammern (54a-54f) anzeigt.

12. Verfahren gemäß Anspruch 7, ferner umfassend Modifizieren der Fluidabgabesequenz bei Vorhandensein eines Fehlers oder einer Warnung von der Diagnosefunktion, der/die anzeigt, dass in mindestens einer der einen oder mehreren Fluidkammern (54a-54f) keine Fluid vorhanden ist.

13. Verfahren gemäß Anspruch 7, ferner umfassend Beenden der Fluidabgabesequenz bei Vorhandensein eines Fehlers oder einer Warnung von der Diagnosefunktion, der/die anzeigt, dass Fluid in mindestens einer der einen oder mehreren Fluidkammern (54a-54f) fehlt.

14. Abgabesystem (10), umfassend:
eine mit einer Pipette befüllbare Kartusche (50) mit mindestens einer Fluidkammer (54a-54f) darin und einem Ejektorkopf (60), der in Fluidströmungsverbindung mit der mindestens einen Fluidkammer steht, wobei der Ejektorkopf eine Vielzahl von Fluidejektoren (64) und eine Fluiderkennungsschaltung (82, 200, 300) darauf enthält;
einen in dem Abgabesystem (10) angeordneten Prozessor (412), der mit einem Fluiderkennungsalgorithmus konfiguriert ist, wobei der Prozessor in elektrischer Verbindung mit der Fluiderkennungsschaltung steht, um ein Fehlersignal zu aktivieren, wenn sich keine Fluid in der mindestens einen Fluidkammer befindet; und
eine Benutzereingabevorrichtung (400) zum Modifizieren oder Beenden einer Fluidabgabesequenz bei Aktivierung des Fehlersignals, wobei das Abgabesystem (10) **dadurch gekennzeichnet ist, dass** der Fluiderkennungsalgorithmus so programmiert ist, dass er (a) Fluidleitfähigkeitsdaten, (b) thermische Ejektordaten oder eine Kombination von (a) und (b) verwendet, um zu bestimmen, ob eine Fluid in der mindestens einen Fluidkammer (54a-54f) vorhanden ist, und dass der Fluiderkennungsalgorithmus so programmiert ist, dass er (i) zunächst Fluidleitfähigkeitsdaten verwendet und (ii) thermische Ejektordaten verwendet, falls das Fluid nicht durch (i) gefunden wird.

15. Abgabesystem nach Anspruch 14, wobei die mit einer Pipette befüllbare Kartusche (50) zwei oder mehr Fluidkammern (54a-54f) umfasst und wobei der Fluiderkennungsalgorithmus so programmiert ist, dass er bestimmt, ob eine Fluid in einer vorbestimmten der zwei oder mehr Fluidkammern (54a-54f) fehlt.

16. Abgabesystem nach Anspruch 14, wobei der Fluiderkennungsalgorithmus so programmiert ist, dass er feststellt, wann die mindestens eine Fluidkammer (54a-54f) keine Fluid mehr enthält.

17. Dosiersystem nach Anspruch 14, wobei der Widerstand und die Kapazität zwischen zwei Elektroden (84, 82) gemessen werden, die dem gleichen Fluidejektor (64) entsprechen.

18. Dosiersystem nach Anspruch 14, wobei die Änderung der Heizrate des Fluidejektors als Erfassungsmechanismus verwendet wird.

## Revendications

1. Un système de distribution (10) comprenant :
une cartouche de fluide (50) remplissable par pipette ayant une ou plusieurs chambres de fluide (54a~54f) en elle et à laquelle est fixée une tête d'éjection (60), la tête d'éjection contenant une pluralité d'éjecteurs de fluide (64), les éjecteurs de fluide étant en communication fluidique avec la ou les chambres de fluide de la cartouche de fluide remplissable par pipette ;
un circuit (80, 200, 300) de détection de fluide disposé sur la tête d'éjection et associé à au moins un parmi la pluralité d'éjecteurs de fluide pour signaler la présence ou l'absence de fluide dans la ou les chambres à fluide ; et
un processeur (412) disposé, configuré avec un algorithme de détection de fluide, le processeur (412) étant en communication électrique avec le circuit (80, 200, 300) de détection de fluide pour activer un signal d'erreur en l'absence de fluide,
le système de distribution (10) étant **caractérisé en ce que** l'algorithme de détection de fluide est programmé pour utiliser (a) des données de conductivité du fluide, (b) des données thermiques d'éjecteur, ou une combinaison de (a) et (b) pour déterminer si un fluide est présent dans ladite au moins une chambre à fluide (54a~54f),
l'algorithme de détection de fluide est programmé pour (i) utiliser initialement les données de conductivité du fluide et pour (ii) utiliser les données thermiques de l'éjecteur si le fluide n'est pas trouvé par (i).

2. Le système de distribution selon la revendication 1, dans lequel le circuit (80, 200, 300) de détection de fluide est sélectionné dans le groupe constitué de (a) un circuit (80) de détection de conductivité, (b) un circuit (200, 300) de détection thermique, et une combinaison de (a) et (b).

3. Le système de distribution selon la revendication 1, dans lequel le circuit (80, 200, 300) de détection de fluide comprend un circuit (80) de détection de conductivité et le circuit (80) de détection de conductivité comprend une première électrode (82) en communication électrique avec au moins un éjecteur de la pluralité d'éjecteurs de fluide, et une deuxième électrode (84) disposée dans un trajet d'écoulement de fluide vers ledit au moins un éjecteur de la pluralité d'éjecteurs de fluide.

4. Le système de distribution selon la revendication 1, dans lequel le circuit (80, 200, 300) de détection de fluide comprend un circuit (200, 300) de détection thermique et le circuit (200, 300) de détection thermique comprend un circuit (200) de détection de pente de tension pour au moins un éjecteur de la pluralité d'éjecteurs de fluide (64),
le circuit (200, 300) de détection de pente de tension étant configuré pour détecter un changement dans la vitesse de chauffage d'une surface dudit au moins un éjecteur de la pluralité d'éjecteurs de fluide (64).

5. Le système de distribution selon la revendication 1, dans lequel la cartouche de fluide (50) comprend deux ou plusieurs chambres de fluide discrètes.

6. Le système de distribution selon la revendication 1, dans lequel la tête d'éjection (60) comprend deux ou plusieurs réseaux d'éjecteurs de fluide (64) et au moins un éjecteur de fluide de chacun parmi les deux ou plusieurs réseaux d'éjecteurs de fluide est associé au circuit (80, 200, 300) de détection fluide.

7. Un procédé de distribution de fluide avec un système de distribution (10), comprenant :
le fait de fournir une cartouche de fluide (50) remplissable par pipette comportant une ou plusieurs chambres de fluide (54a~54f) et ayant une tête d'éjection (60) fixée à elle, la tête d'éjection contenant en elle une pluralité d'éjecteurs de fluide (64), les éjecteurs de fluide étant en communication fluidique avec la ou les chambres de fluide de la cartouche de fluide remplissable par pipette ; et un circuit (80, 200, 300) de détection de fluide est disposé sur la tête d'éjection et associé à au moins un éjecteur de la pluralité d'éjecteurs de fluide pour signaler la présence ou l'absence de fluide dans la ou les chambres à fluide ;
le fait de remplir au moins une chambre parmi la ou les chambres de fluide avec un fluide à distribuer ;
le fait d'activer une fonction de diagnostic du système de distribution pour déterminer si le fluide à distribuer est présent ou absent de ladite au moins une chambre parmi la ou les chambres de fluide ; et
le fait de lancer une séquence de distribution de fluide en l'absence d'erreur ou d'avertissement de la fonction de diagnostic, le procédé étant **caractérisé en ce qu'**il comprend en outre :
le fait d'utiliser (a) des données de conductivité du fluide, (b) des données thermiques de l'éjecteur, ou une combinaison de (a) et (b) pour déterminer si un fluide est présent dans ladite au moins une chambre de fluide (54a~54f),
(i) initialement, les données de conductivité du fluide sont utilisées et si le fluide n'est pas trouvé par (i), (ii) les données thermiques de l'éjecteur sont utilisées.

8. Le procédé selon la revendication 7, dans lequel le circuit (80, 200, 300) de détection de fluide est sélectionné dans le groupe constitué de (a) un circuit (80) de détection de conductivité, (b) un circuit (200, 300) de détection thermique, et une combinaison de (a) et (b).

9. Le procédé selon la revendication 7, dans lequel le circuit (80, 200, 300) de détection de fluide comprend un circuit (80) de détection de conductivité et le circuit (80) de détection de conductivité comprend une première électrode (82) en communication électrique avec au moins un éjecteur de la pluralité d'éjecteurs de fluide, et une deuxième électrode (84) disposée dans un trajet d'écoulement de fluide vers au moins un éjecteur de la pluralité d'éjecteurs de fluide.

10. Le procédé selon la revendication 7, dans lequel le circuit (80, 200, 300) de détection de fluide comprend un circuit (200, 300) de détection thermique et le circuit (200, 300) de détection thermique comprend un circuit (200) de détection de pente de tension pour au moins un éjecteur de la pluralité d'éjecteurs de fluide.

11. Le procédé selon la revendication 7, comprenant en outre le fait de modifier la séquence de distribution de fluide en présence d'une erreur ou d'un avertissement provenant de la fonction de diagnostic qui indique un fluide incorrect dans au moins une chambre parmi la ou les chambres à fluide (54a~54f).

12. Le procédé selon la revendication 7, comprenant en outre le fait de modifier la séquence de distribution de fluide en présence d'une erreur ou d'un avertissement provenant de la fonction de diagnostic qui indique que le fluide est absent d'au moins une chambre parmi la ou les chambres de fluide (54a~54f).

13. Le procédé selon la revendication 7, comprenant en outre le fait de terminer la séquence de distribution de fluide en présence d'une erreur ou d'un avertissement provenant de la fonction de diagnostic qui indique que le fluide est absent d'au moins une chambre parmi la ou les chambres à fluide (54a~54f).

14. Un système de distribution (10) comprenant :
une cartouche (50) remplissable par pipette ayant au moins une chambre de fluide (54a~54f) en elle et une tête d'éjection (60) en communication fluidique avec ladite au moins une chambre de fluide, la tête d'éjection contenant une pluralité d'éjecteurs de fluide (64) et un circuit (82, 200, 300) de détection de fluide sur elle ;
un processeur (412) disposé dans le système de distribution (10) configuré avec un algorithme de détection de fluide, le processeur étant en communication électrique avec le circuit de détection de fluide pour activer un signal d'erreur en l'absence de fluide dans la ou les chambres à fluide ; et
un dispositif d'entrée utilisateur (400) pour modifier ou terminer une séquence de distribution de fluide lors de l'activation d'un signal d'erreur, le système de distribution (10) étant **caractérisé en ce que** l'algorithme de détection de fluide est programmé pour utiliser (a) des données de conductivité du fluide, (b) des données thermiques d'éjecteur données, ou une combinaison de (a) et (b) afin de déterminer si un fluide est présent dans la ou les chambres à fluide (54a~54f) et **en ce que** l'algorithme de détection de fluide est programmé pour (i) utiliser initialement les données de conductivité du fluide et pour (ii) utiliser les données thermiques de l'éjecteur si le fluide n'est pas trouvé par (i).

15. Le système de distribution selon la revendication 14, dans lequel la cartouche (50) remplissable par pipette comprend deux ou plusieurs chambres de fluide (54a~54f) et dans lequel l'algorithme de détection de fluide est programmé pour déterminer si un fluide est absent d'une chambre prédéterminée parmi les deux ou plusieurs chambres à fluide (54a~54f).

16. Le système de distribution selon la revendication 14, dans lequel l'algorithme de détection de fluide est programmé pour déterminer le moment où ladite au moins une chambre de fluide (54a~54f) est à court de fluide.

17. Le système de distribution selon la revendication 14, dans lequel la résistance et la capacité sont mesurées entre deux électrodes (84, 82) correspondant à un même éjecteur de fluide (64).

18. Le système de distribution selon la revendication 14, dans lequel le changement de vitesse de chauffage de l'éjecteur de fluide est utilisé comme mécanisme de détection.
